# EUROPEAN PATENT APPLICATION

(11) **EP 2 548 645 A1**
(43) Date of publication of application: **23.01.2013**
(21) Application number: 11173213.7
(22) Date of filing: 08.07.2011
(51) Int. Cl.: B01L 3/00

(54) **Device for handling microfluids and method for manufacturing a device suitable for handling microfluids**

(71) Applicant: PHD Nordic Oy, 87400 Kajaani (FI)
(72) Inventor: Ovaska, Mikko, 87150 Kajaani (FI); Kemppainen, Kalle, 87150 Kajaani (FI); Jormakka, Matti, 90100 Oulu (FI); Kauppi, Martti, 90570 Oulu (FI); Rautiainen, Ville, 87500 Kajaani (FI)
(74) Representative: Väisänen, Olli Jaakko

(57) **Abstract**

A device (1000; 1400+1500; 1900+2000+2100) for handling microfluids comprises at least two layers (200, 210, 220, 230; 1400, 1500; 1900, 2000, 2100) formed from porous hydrophilic material (202),
- to each of which is added hydrophobic material (201) through the thickness of the layer (200, 210, 220, 230; 1400, 1500; 1900, 2000, 2100) to form a hydrophobic barrier (203) defining the boundaries (R) of a channel (K), so that a fluid arriving in the channel (K) in the layer (210, 220, 230; 1400, 1500; 1900, 2000) can travel along the channel (K) in the plane of the layer (210, 220, 230; 1400, 1500; 1900, 2000) bordered by the boundary (R); and
- which are fixed on top of each other by an adhesive substance (L) arranged between the layers (200, 210, 220, 230; 1400, 1500; 1900, 2000, 2100) so that the fluid can be transferred from the channel (K) of one layer (200, 210, 220, 230; 1400, 1500; 1900, 2000, 2100) directly to the channel (K) of another layer (200, 210, 220, 230; 1400, 1500; 1900, 2000, 2100). The adhesive substance (L) is arranged on the boundary (R) or in its immediate vicinity so that the channel (K) remains free of the adhesive substance (L). The patent application also includes a method claim.

## Description

### Field of the invention

The invention is related generally to three-dimensional devices for handling microfluids.

### State of the art

Various means currently exist for analyzing fluids. Microfluidic devices form one category of these means.

With microfluidic devices it is possible, when they are used in biotechnology or medicine, for example, to trigger a biochemical reaction using a relatively small sample.

Three-dimensional microfluidic devices comprise at least two layers within which a fluid arriving in the device can travel in the plane of a layer. Characteristic of a three-dimensional microfluidic device is that the fluid can be transferred from one layer to another.

In order that a fluid can be transferred from the plane of the first layer to the plane of the second layer, a method of implementing a microfluidic device is known in which a two-sided tape, containing holes to form transfer channels between the layers, is inserted between the layers in which the fluid travels. This kind of solution is presented in international patent application publication WO 2010/102294 A1.

### Objective of the invention

The objective of the invention is to enable simpler implementation of a device intended for handling microfluids. This objective can be fulfilled with the device of independent patent claim 1 and the method of independent patent claim 4.

A device for handling microfluids comprises at least two layers formed from porous hydrophilic material, to each of which is added hydrophobic material through the thickness of the layer to form a hydrophobic barrier defining the boundaries of a channel, so that a fluid arriving in the channel can travel in the layer, along the channel in the plane of the layer, bordered by the boundary. The layers are fixed on top of each other by an adhesive substance arranged between the layers, so that the fluid can be transferred from the channel of one layer directly to the channel of another layer. The adhesive substance is arranged on the boundary or in its immediate vicinity, so that the channel remains free of the adhesive substance.

A method of manufacturing a device for handling microfluids comprises the following steps:
a) forming at least two layers from porous hydrophilic material, by adding hydrophobic material to the layers through their thickness to form a hydrophobic barrier defining the boundaries of a channel, so that a fluid arriving in the channel can travel in the layer, along the channel in the plane of the layer, bordered by the boundary; and
b) fixing the layers on top of each other by arranging an adhesive substance between the layers, on the boundary or in its immediate vicinity, so that the channel remains free of the adhesive substance and so that the fluid can be transferred from the channel of one layer directly to the channel of another layer.

The dependent claims describe advantageous embodiments of the device and the method.

### Advantages of the invention

Due to the form of implementation of the device and the presented method, there is no need to insert a separate intermediate layer formed by a two-sided tape, which is a clear improvement step compared with the solution presented in international patent application publication WO 2010/102294 A1, for example.

Not only is the perforation of a two-sided tape technically challenging during manufacturing, since the adhesive that is released during perforation tends to mess up the perforating device and thus mess up the workplace or tends to clog up the assembly devices used, but the problem of a two-sided tape may also easily be that, due to the thickness of the tape, the transfer of a fluid from the channel of one layer to the channel of another layer becomes more difficult.

Particularly in the case when a device is used for handling a microfluid that, due to its viscosity, does not easily flow, trouble-free transfer of the fluid between the device's layers by capillary action, for example, is not possible, because, at each hole in the two-sided tape, the filling of the hole needed for capillary flow to continue is slow and thus limits the usefulness of the device. With the now presented implementation of the device, the advance of a fluid from one layer to another is easier, since the thickness of the adhesive substance put between the layers is much smaller than the thickness of a two-sided tape would be.

Because the channels are hydrophilic and a hydrophobic barrier defines the boundaries of a channel, the device and method are very well suited for use with certain water-soluble adhesive substances in particular, for if the adhesive substance to be used includes water as a solvent, the hydrophobic boundary area can prevent the adhesive substance from entering a channel, which might lead to the congestion, or even blocking, of the channel. In addition, adhesive substances that include water as a solvent are generally considered less harmful to the environment than, for example, those adhesive substances that include organic material like alcohol or acetylene as a solvent.

The fact that the layers include porous material promotes the movement of the adhesive substance in the desired region of each layer, not only ensuring a stronger end result, since the adhesive substance can penetrate deeper into the layer than it would if the layer included non-porous material, but also better preventing the adhesive substance from flowing over a channel's boundary into the channel during the gluing step, since a porous material seeks to absorb more adhesive substance.

In an advantageous embodiment of the device, the hydrophilic material is or contains paper. The hydrophobic material contains wax, which is brought to the porous hydrophilic material by printing, after which the wax is spread through the thickness of the layer by heating the layer. This embodiment of the device not only can be economically implemented, but also enables the use of an adhesive substance that is activated by heating.

In an advantageous embodiment of the method, the device is formed by gluing heat-treated printed sheets on top of each other, which sheets have, before heating, been printed with many wax patterns to be used in forming single layers of an individual device.

In an advantageous embodiment of the device and the method, stacked layers are formed by printing individual layers beside each other on the paper and then folding these layers on top of each other after the adhesive substance has first been spread. This form of implementation allows exact alignment of the respective layers and requires only simple equipment and pressure-activated glue.

### List of drawings

In the following we present a device and a method of the invention, illustrated by the examples in the accompanying drawings:
- FIG 1: steps used to manufacture a device for handling microfluids;
- FIG 2: the individual layers of a 4-layer device for handling microfluids;
- FIG 3: a cross-section III-III of the device of FIG 2;
- FIG 4: a cross-section IV-IV of the device of FIG 2;
- FIG 5: a cross-section V-V of the device of FIG 2;
- FIG 6: steps related to finishing a device for handling microfluids;
- FIG 7: a paper sheet on which the layers intended for use in manufacturing a device for handling microfluids are visible after being wax-printed on the sheet;
- FIG 8: the paper sheet of FIG 7 after it has been heated, so that the wax has advanced through the thickness of the sheet;
- FIG 9: a part cut from the paper sheet of FIG 8 which has the four layers of FIG 2 in one piece;
- FIG 10: a device for handling microfluids manufactured by using the part shown in FIG 9 viewed from the front and back;
- FIG 11: the device presented in FIG 10 is wetted in a fluid dyed with an indicator;
- FIG 12 and 13: the color change caused by the fluid dyed with an indicator in the channels of the device presented in FIG 10;
- FIG 14 and 15: the individual layers of a 2-layer device for handling microfluids;
- FIG 16 - 18: the individual layers of a further, 3-layer device for handling microfluids; and
- FIG 19: a cross-section XIX-XIX of a device made from the layers presented in FIG 16-18.

The same reference numbers refer to the same technical features in all drawings.

### Detailed description of the invention

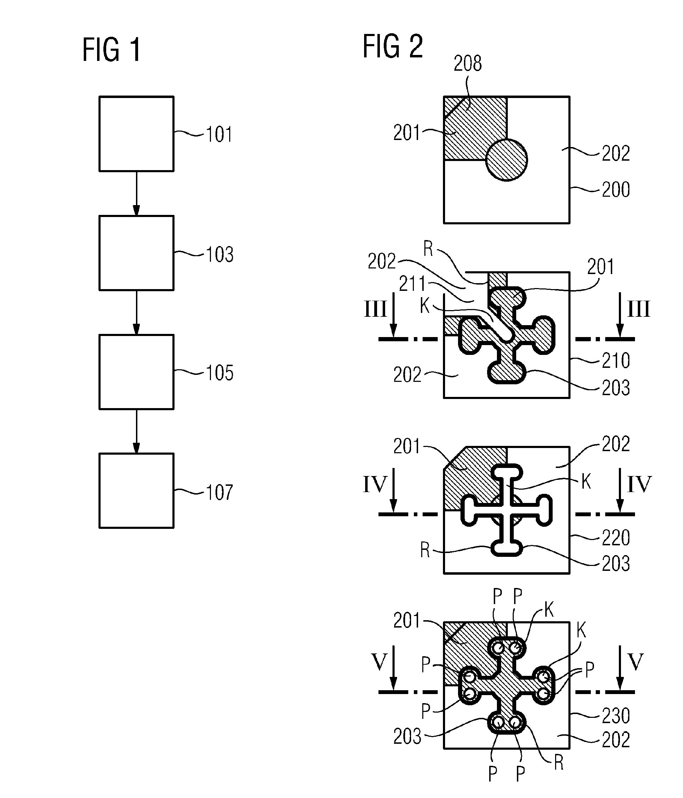

FIG 1 presents the use of a device (which in an advantageous embodiment is a test platform) for handling microfluids. In step 101 the sample is absorbed into the device. In step 103 the sample travels in the microfluidic channels of the device. In step 105 the sample is dispensed exactly to the test zones in the device. In step 107 the sample is analyzed using the test zones.

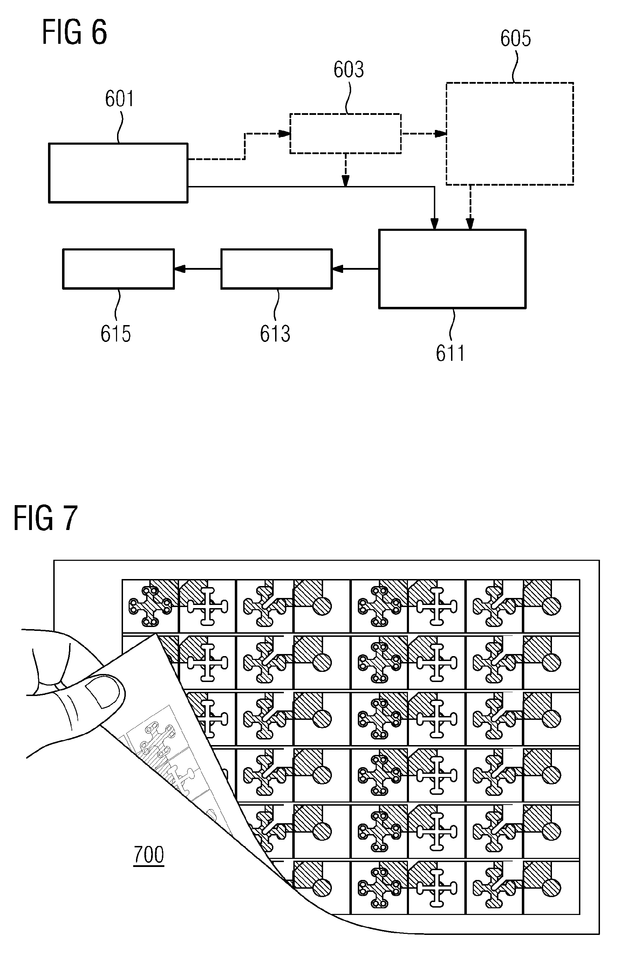

FIG 6 presents the process of manufacturing a device for handling microfluids. In step 601 hydrophobic regions are created. In the optional step 603 the layers are further processed. In the optional step 605 the test zones are processed to be ready for analysis. In step 611 the layers are joined together. In step 613 the devices are cut away from each other and in step 615 the ready devices are packed.

The hydrophobic regions of step 601 are created as follows:
Wax 201 is brought to sheet 700 in the way that is apparent in FIG 7 by printing a desired pattern on it with a Xerox Corp. Solid Ink technology printer - a Xerox Phaser 8560 or 8860 printer, for example, preferably with the "fine" print setting. As shown in FIG 7, the patterns printed on one face of the sheet can be seen faintly on the other face, at least if viewed against the light.

After this, sheet 700 is put in an approximately 150°C oven for about two minutes. Under this influence, wax 201 used in the printing will melt. In that case, wax 201 will be absorbed into the sheet through the thickness of the sheet.

A hydrophobic barrier is formed from the printed wax lines, the target width of which is at least 300 µm. Lines that are thinner than this width do not contain enough wax to allow a hydrophilic barrier to be formed through the entire thickness of the sheet.

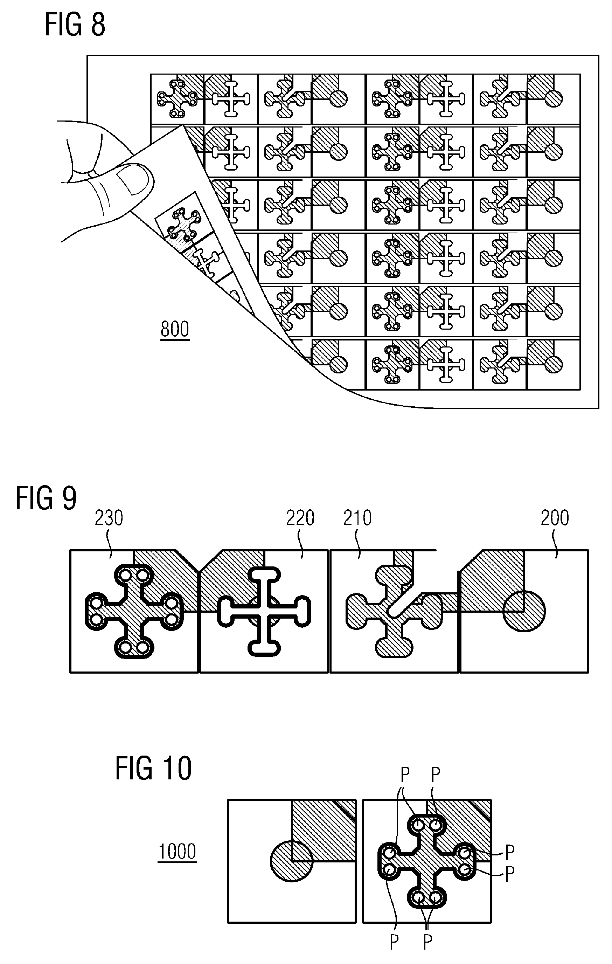

FIG 8 presents a heat-treated sheet 800 from which it is apparent that, compared with sheet 700, the wax has been absorbed into sheet 800 through the entire thickness of sheet 800. The wax forms a hydrophobic barrier 203, which defines the boundaries R of channel K.

During the heat treatment the width of the wax line is increased, so that a line that is 300 µm in width becomes 850 µm ±50 µm. This is the minimum width for a functional hydrophobic barrier with the paper and wax used.

In order to form the hydrophilic channel K, the wax prints defining its boundary should be at a distance of at least 1100 µm from each other. In this case the width of channel K will be about 560 µm due to the heat treatment. A hydrophilic channel can preferably be even thicker; most important is only that the fluid advances in channel K by capillary action.

The filter papers Whatman NO. 1, Ahlstrom grade 601 and Hahnemuehle Grade FP595 have proven to be very good as sheet materials. The use of other paper grades is also possible, but the filter paper grades presented here have a pore size that is especially well suited for the absorption of fluids. Similarly the basis weight (g/m2) of the mentioned filter papers and the form of the fiber matrix are advantageous for the intended purpose and allow the implementation of a device for handling microfluids, which device can be used without an expensive external pump.

The required wax line width is chosen in accordance with the sheet material to be used. The above-presented wax line width (at least 300 µm) works with Whatman NO. 1 paper, but the other paper grades may require the use of a thicker line width.

FIG 2 presents the individual layers 200, 210, 220, 230 of a 4-layer device 1000 for the handling of microfluids. The layers are made in the way described above.

The first layer 200 comprises a hydrophilic region 202 and a hydrophobic region 201. A wetting border 208 is marked in the hydrophobic region 201 of the first layer 200 by printing a line on it in a different color. However, the first layer does not contain an actual channel K.

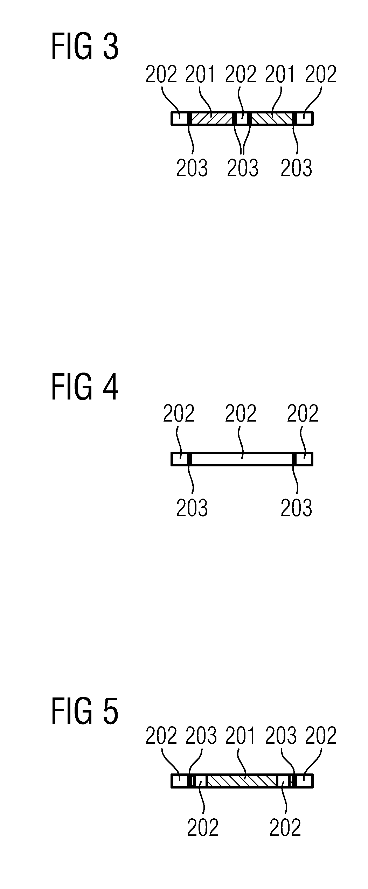

The second layer 210, whose cross section III-III is presented in FIG 3, comprises a hydrophilic region 202 and a hydrophobic region 201. Hydrophobic region 202 now forms a hydrophobic barrier 203. Hydrophobic barrier 203 defines the boundaries R of channel K. Fluid arriving in channel K, such as, in particular, water, urine, sweat, serum or tissue extract, can travel in layer 210, along channel K in the plane of layer 210, bordered by boundary R.

The third layer 220, whose cross section IV-IV is presented in FIG 4, comprises a hydrophilic region 202 and a hydrophobic region 202, as in the second layer. Hydrophobic region 201 also forms a hydrophobic barrier in the third layer 220, which defines the boundaries R of channel K. Fluid arriving in channel K in the third layer 220 can also travel in layer 220, along channel K in the plane of layer 220, bordered by boundary R.

The fourth layer 230, whose cross section V-V is presented in FIG 5, comprises a hydrophilic region 202 and a hydrophobic region 201, like the second and third layer 210, 220. The actual test zones p are made in the fourth layer.

Briefly presented, the functions of the individual layers 200, 210, 220, 230 are the following:
The first layer 200 is a dry protective surface, on one corner of which a wetting border 208 is preferably marked, up to which the device will be wetted with the fluid to be analyzed.

The second layer 210 contains a fluid reservoir 211, which is connected to the layer's open boundary or corner. In addition, the second layer 210 includes channel K in order to transport the fluid from the fluid reservoir along channel K.

The third layer 220 contains a channel structure K that has several preferably radial branches. In the example of FIG 2 the number of branches n = 2, but n can be an arbitrary natural number depending on the desired implementation method. The branches can be implemented with widened areas at the ends, for example.

The fourth layer 230 contains the actual test zones. For each widened area the fourth layer 230 now contains several test zones. In the example of FIG 2 the number of test zones m = 2, but m can be an arbitrary natural number depending on the desired implementation method.

Thus, by wetting the corner of device 1000, the fluid reservoir 211 of the second layer 210 is supplied with fluid, which travels through the channels of the second and third layers 220, 230 to the n branches and in each of these to the m test zones; in other words, a total of 8 test zones p can be made from the fluid in device 1000.

If a device for handling microfluids is made with several layers, such as the four layers presented in the example of FIG 2, it is possible, by utilizing the manufacturing method presented in FIG 7 and FIG 8, to print, as adjoining pieces, the layers intended for folding on top of each other. Thus the pieces intended for folding on top of each other can also be heated at the same time.

FIG 9 presents the layers 200, 210, 220 and 230 of FIG 2 printed as adjoining pieces.

In accordance with the invention, layers 200, 210, 220, 230 are fixed on top of each other by using an adhesive substance L arranged between layers 200, 210, 220, 230 so that the fluid can be transferred from the channel K of one layer 210, 220, 230 directly to the channel K of another layer 210, 220, 230.

The adhesive substance L is arranged on the boundary R or in its immediate vicinity so that channel K remains free of adhesive substance L. After this, the strip presented in FIG 9 is folded so that the first layer 200 and the last layer 230 remain on the outermost faces in the way apparent in FIG 10.

In accordance with this embodiment the stacked layers are preferably formed by printing individual layers beside each other on the paper and then folding these layers on top of each other after the adhesive substance L has first been spread.

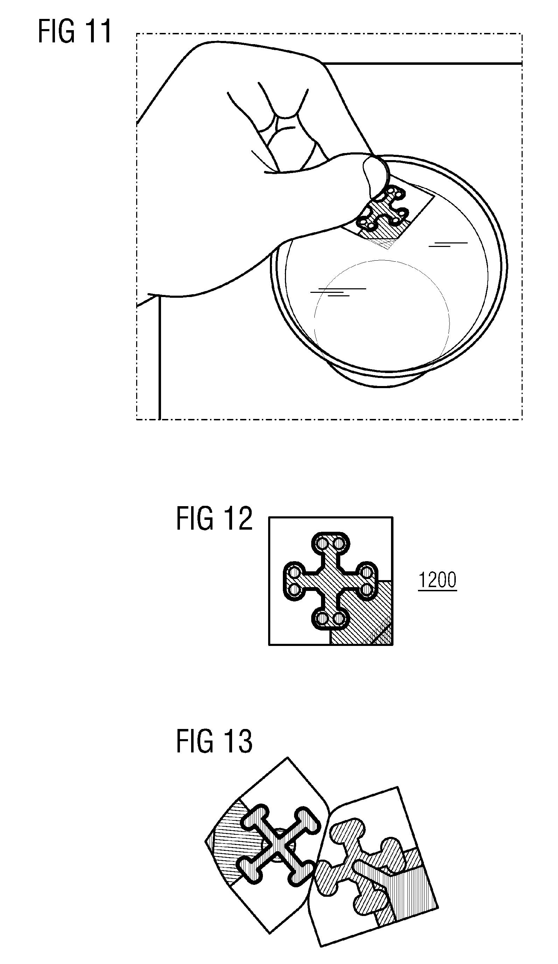

In the example of FIG 11 the finished device 1000 presented in FIG 10 is wetted at the corner in indicator-dyed fluid up to the wetting border 208. FIG 12 and 13 show the color change caused by the indicator-dyed fluid in the channels K of the device presented in FIG 10. Fluid from the fluid reservoir 211 travels to the test zones p in a different layer.

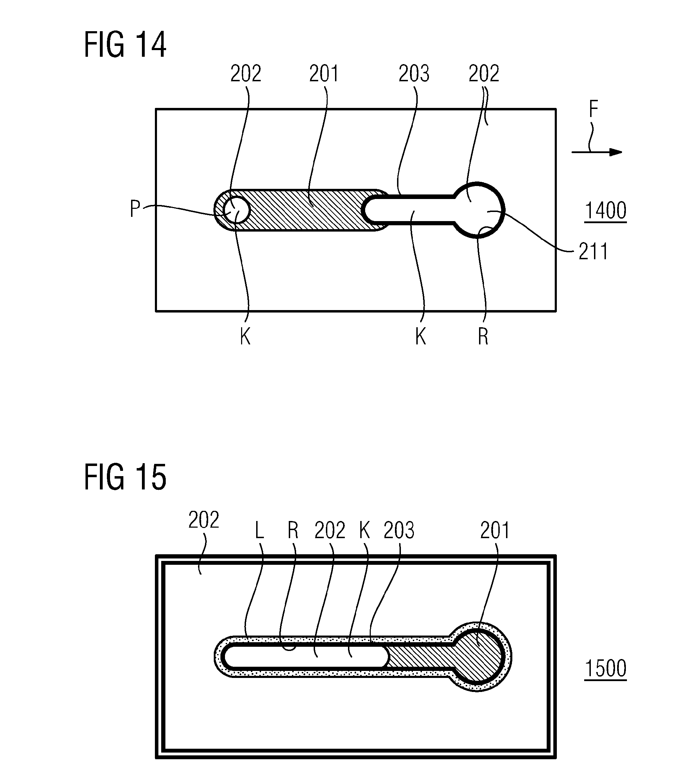

FIG 14 and 15 present the individual layers 1400 and 1500 of a two-layer device for handling microfluids. The finished device is not wetted at the corner, but liquid can be spotted into it so that fluid reservoir 211, which is now open on top of layer 1400, is supplied with sufficient fluid.

In accordance with the invention layers 1400 and 1500 are fixed on top of each other by adhesive substance L arranged between layers 1400 and 1500 so that the fluid can be transferred from channel K of layer 1400 directly to channel K of layer 1500. From channel K of layer 1500 the fluid can be transferred to the test zone p located in layer 1400.

The adhesive substance L is arranged on the boundary R or in its immediate vicinity so that channel K remains free of adhesive substance L.

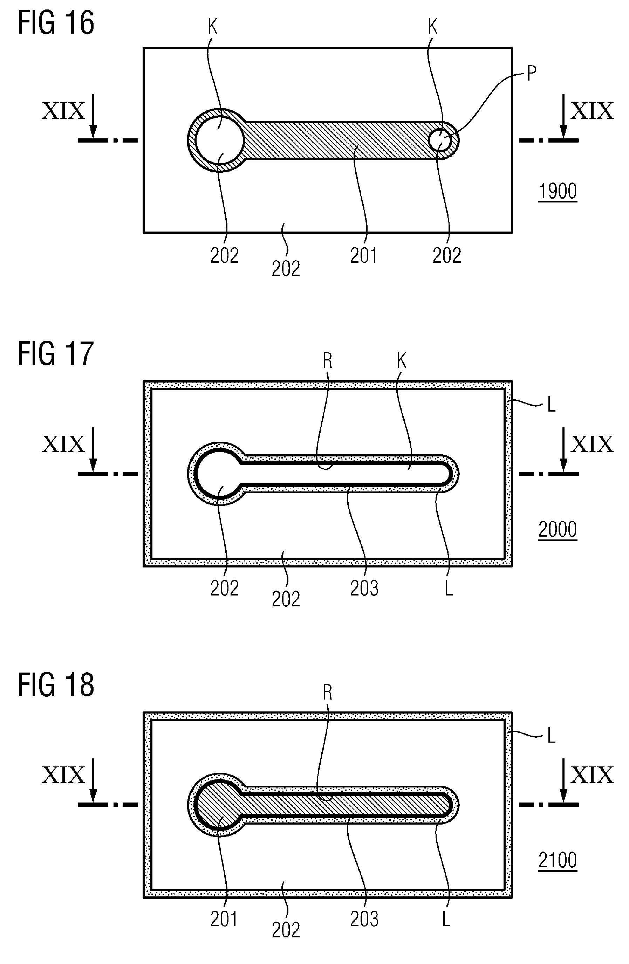

FIG 16 - 18 present another possibility for individual layers 1900, 2000 and 2100 of a three-layer device for handling microfluids. The embodiment assembled from the layers presented in FIG 16 - 18 does not differ from the embodiments implemented by the layers presented in FIG 14 - 15; in the case of this embodiment, too, the fluid to be processed in the device is spotted into the device.

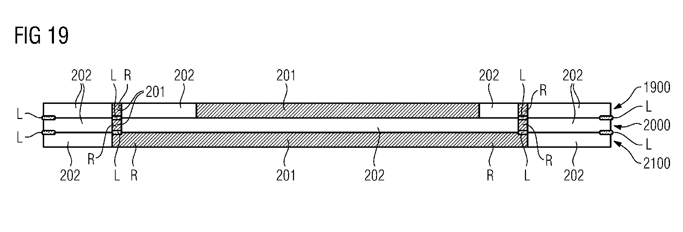

FIG 19 presents a cross-section according to section XIX-XIX of a device assembled from the layers presented in FIG 16-18.

Layers 1900, 2000, 2100 are fixed on top of each other by adhesive substance L arranged between the layers 1900, 2000, 2100 so that the fluid can be transferred from channel K of one layer 1900, 2000, 2100 directly to channel K of another layer 1900, 2000, 2100. The adhesive substance L is arranged on the boundary R or in its immediate vicinity so that channel K remains free of adhesive substance L.

The invention is presented with the aid of the above exemplary embodiments. The exemplary embodiments are not meant to limit the scope of the patent protection applied for, but the scope of protection can vary and differ from the exemplary embodiments within the framework of the attached claims and their legal equivalents.

For example, insect waxes, vegetable waxes, mineral waxes, petroleum waxes, microchrystalline waxes, synthetic waxes or combinations thereof may be used instead of, or in addition to, Xerox Corp.'s wax-based ink. Candle wax may also be used.

Each test zone p can include, in particular, one or more of the following: a protein assay, a cholesterol assay, a glucose assay and a bioassay.

For a protein assay, a priming solution (0.20 µL, 250-mM citrate buffer, pH 1.9, prepared in 92% water and 8% ethanol by volume) can be spotted in the protein test zone using a micro-pipette (VWR) and allowed to dry for 10 minutes at ambient temperature. A reagent solution (0.20 µL, 9-mM tetrabromophenol blue prepared in 95% ethanol and 5% water by volume) is spotted on top of the priming solution and dried for 10 minutes at ambient temperature.

More detailed instructions for preparing protein and other assays can be found in patent application publication WO 2010/102294 A1 and in particular in the documents referred to therein.

## Claims

1. A device (1000; 1400+1500; 1900+2000+2100) for handling microfluids,
a) comprising at least two layers (200, 210, 220, 230; 1400, 1500; 1900, 2000, 2100), formed from porous hydrophilic material (202),
- to each of which is added hydrophobic material (201) through the thickness of the layer (200, 210, 220, 230; 1400, 1500; 1900, 2000, 2100) to form a hydrophobic barrier (203) defining the boundaries (R) of a channel (K), so that a fluid arriving in the channel (K) can travel in the layer (210, 220, 230; 1400, 1500; 1900, 2000) along the channel (K) in the plane of the layer (210, 220, 230; 1400, 1500; 1900, 2000) bordered by the boundary (R);
- which are fixed on top of each other by an adhesive substance (L) arranged between the layers (200, 210, 220, 230; 1400, 1500; 1900, 2000, 2100) so that the fluid can be transferred from the channel (K) of one layer (200, 210, 220, 230; 1400, 1500; 1900, 2000, 2100) directly to the channel (K) of another layer (200, 210, 220, 230; 1400, 1500; 1900, 2000, 2100); and
b) wherein the adhesive substance (L) is arranged on the boundary (R) or in its immediate vicinity so that the channel (K) remains free of the adhesive substance (L).

2. The device of claim 1 (1000; 1400+1500; 1900+2000+2100), whose
- porous hydrophilic material (202) is or contains paper; and wherein
- the hydrophobic material (201) contains wax which is brought to the porous hydrophilic material (202) by printing, after which the wax is spread through the thickness of the layer (200, 210, 220, 230; 1400, 1500; 1900, 2000, 2100) by heating the layer (200, 210, 220, 230; 1400, 1500; 1900, 2000, 2100).

3. The device (1000) of claim 1 or 2, whose stacked layers (200, 210, 220, 230) are formed by printing individual layers (200, 210, 220, 230) beside each other on the paper and then folding these layers on top of each other after the adhesive substance (L) has first been spread.

4. A method of manufacturing the device (1000; 1400+1500; 1900, 2000, 2100) for handling microfluids, wherein:
a) at least two layers (200, 210, 220, 230; 1400, 1500; 1900, 2000, 2100) are formed from porous hydrophilic material (202), by adding hydrophobic material (201) through the thickness of a layer (200, 210, 220, 230; 1400, 1500; 1900, 2000, 2100) to form a hydrophobic barrier (203) defining the boundaries (R) of a channel (K), so that a fluid arriving in the channel (K) can travel in the layer (200, 210, 220, 230; 1400, 1500; 1900, 2000, 2100) along the channel (K) in the plane of the layer (200, 210, 220, 230; 1400, 1500; 1900, 2000, 2100) bordered by the boundary (R);
b) the layers (200, 210, 220, 230; 1400, 1500; 1900, 2000, 2100) are fixed on top of each other by arranging an adhesive substance (L) between the layers (200, 210, 220, 230; 1400, 1500; 1900, 2000, 2100) on the boundary (R) or in its immediate vicinity so that the channel (K) remains free of the adhesive substance (L) and so that the fluid can be transferred from the channel (K) of one layer (200, 210, 220, 230; 1400, 1500; 1900, 2000, 2100) directly to the channel (K) of another layer (200, 210, 220, 230; 1400, 1500; 1900, 2000, 2100).

5. The method of claim 4, wherein
- the porous hydrophilic material (202) is or contains paper; and wherein
- the hydrophobic material (201) contains wax which is brought to the porous hydrophilic material (202) by printing, after which the wax is spread through the thickness of the layer (200, 210, 220, 230; 1400, 1500; 1900, 2000, 2100) by heating the layer (200, 210, 220, 230; 1400, 1500; 1900, 2000, 2100).

6. The method of claim 5, wherein the device (1000; 1400+1500; 1900+2000+2100) is formed by gluing heat-treated printed sheets on top of each other, which sheets have, before heating, been printed with many wax patterns to be used in forming a single layer (1400, 1500; 1900, 2000, 2100) of an individual device (1000; 1400+1500; 1900+2000+2100).

7. The method of claim 4, 5 or 6, wherein the stacked layers (200, 210, 220, 230) are formed by printing individual layers (200, 210, 220, 230) beside each other on the paper and then folding these layers on top of each other after the adhesive substance (L) has first been spread.
